# EUROPEAN PATENT SPECIFICATION

(11) **EP 3 243 714 B1**
(45) Date of publication and mention of the grant of the patent: **19.12.2018**
(21) Application number: 16169180.3
(22) Date of filing: 11.05.2016
(51) Int. Cl.: B60T 1/14, B60R 21/02

(54) **LOW PRESSURE VEHICLE BRAKING ARRANGEMENT**
NIEDERDRUCKFAHRZEUGBREMSVORRICHTUNG
SYSTÈME DE FREINAGE DE VÉHICULE À BASSE PRESSION

(43) Date of publication of application: 15.11.2017
(73) Proprietor: Autoliv Development AB, 447 83 Vargarda (SE)
(72) Inventor: BRÅSE, Dan, 447 32 Vårgårda (SE); Nylen, Daniel, 466 92 Sollebrunn (SE)
(74) Representative: AWA Sweden AB

(56) References cited:
- EP-A1- 2 311 695
- WO-A1-03/020560
- WO-A1-2015/137867
- CN-Y- 201 224 399
- DE-A1- 2 251 152
- DE-A1-102010 014 932
- DE-A1-102011 012 966
- DE-U1-202008 012 067
- FR-A1- 2 353 421
- US-A1- 2011 017 538

## Description

### Technical Field of the Invention

The present invention relates to a low pressure vehicle braking arrangement comprising a low pressure braking member being connectable to a vehicle, the low pressure braking member being movable from a rest position to a braking position when connected to a vehicle, wherein the low pressure braking member is configured to, in the braking position, interact with the ground and generate a retaining force.

### Background Art

A vehicle may be provided with a low pressure brake arrangement that is arranged to that apply suction to the road to decrease the stopping distance in an emergency situation.

WO 2015/163812 discloses a vehicle braking arrangement that comprises a braking plate which is movable from a rest position with a certain ground clearance to a braking position where contact is made to the ground. The braking plate is arranged to form a volume between the braking plate and the ground. The arrangement further comprises an expandable chamber which is arranged to be fluidly connected to the volume formed between the braking plate and the ground in the braking position in order to lower the pressure therein, which results in that the braking plate is pressed against the ground such that a retaining force between the braking plate and the ground is obtained.

However, WO 2015/163812 is considered bulky and complex and there is a need for a more simple and space-efficient solution.

EP 2 311 695 A1 describes a vehicle braking arrangement comprising a low pressure braking member in the form of a flexible mat.

DE 10 2011 012 966 A1 describes a vehicle braking arrangement comprising a low pressure braking member.

DE 10 2010 014 932 A1 describes a low pressure vehicle braking arrangement comprising a low pressure braking member in the form of a braking mat.

DE 20 2008 012 067 U1 describes a vehicle braking arrangement comprising an inflatable member.

### Summary of the Invention

It is an object of the present invention to provide an improved low pressure vehicle braking arrangement that is easy to mount in a vehicle.

These and other objects that will be apparent from the following summary and description are achieved by a low pressure vehicle braking arrangement according to the appended claims.

According to an aspect of the present disclosure there is provided a low pressure vehicle braking arrangement comprising a low pressure braking member being connectable to a vehicle, the low pressure braking member being movable from a rest position to a braking position when connected to a vehicle, wherein the low pressure braking member is configured to, in the braking position, interact with the ground and generate a retaining force, the low pressure braking member being flexible and held in a at least partly folded configuration in said rest position and arranged to, upon activation of the vehicle braking arrangement, assume an unfolded configuration upon movement from said rest position to said braking position and it is roll-folded in the rest position.

By having a flexible braking member that can be roll-folded a braking arrangement having a small package volume is achieved, which may further be unfold to the unfolded configuration in a predictable and quick manner. Hence, a space-efficient braking arrangement is achieved, which facilitates mounting of the arrangement in a vehicle. Also, a braking arrangement having low weight may be provided.

Furthermore, thanks to the small package volume, the low pressure braking member may be protected against weather influences and objects, such as flying stones, in an reliable and easy manner. The braking member may thus be encapsulated to provide protection against influences that could cause damage to the braking member and/or impair the function thereof.

According to one embodiment the low pressure braking arrangement comprises an inflatable structure which is arranged to, upon inflation, move the low pressure braking member from said at least partly folded configuration to said unfolded configuration. This embodiment has the advantage that a very quick and reliable movement of the low pressure braking member to the unfolded configuration is achieved. Furthermore, the inflatable structure may contribute to quickly establish low pressure in the volume formed between the braking member and the ground.

According to one embodiment the inflatable structure comprises at least one primary chamber having an inlet arranged to receive gas from a high pressure source, such as a gas generator or a container with compressed gas, and an outlet that opens into at least one secondary chamber of the inflatable structure, said primary chamber, in an inflated position, extending in an unfolding direction of the low pressure braking member. This embodiment has the advantage that the inflatable structure may be arranged to contribute to accomplish a very efficient movement of the braking member to the braking position, since the braking member may be unfolded in very quick manner.

Hence, upon inflation of the inflatable structure the primary chamber is first inflated, which causes the braking member to quickly unfold from the folded configuration. Then, the secondary chamber is inflated, which causes the inflatable structure to fully deploy and apply a pressure force to the braking member, which pressure force presses the braking member against the ground and thereby facilitates the generation of low pressure in the volume formed between the braking member and the ground.

The volume of the primary chamber is preferably less than the volume of the secondary chamber, in order to provide quick unfolding of the flexible braking member to the unfolded configuration.

The inflatable structure may thus have a primary chamber for expansion in the unfolding direction and a secondary chamber for expansion in a direction being perpendicular to the unfolding direction, wherein the primary chamber serves to unfold the braking member and the secondary chamber serves to apply a pressure force to the braking member in order to press the braking member against the ground.

According to one embodiment said secondary chamber comprises two sub-chambers, preferably one on each side of the primary chamber.The primary chamber may thus form a central chamber arranged between the sub-chambers of the secondary chamber.

According to one embodiment a primary chamber comprises two sub-chambers, each of which opens into a common secondary chamber or into a respective one of said sub-chambers of the secondary chamber. Such a common secondary chamber may, e.g., be disposed between two sub-chambers of a primary chamber.

According to one embodiment the primary chamber comprises two sub-chambers, each of which opens into a respective one of said sub-chambers of the secondary chamber.

According to one embodiment the low pressure vehicle braking arrangement comprises a reinforcing member arranged between the inflatable structure and the low pressure braking member, in order to improve the robustness of the braking arrangement. Furthermore, the reinforcing member may distribute forces, e.g. forces applied by an inflatable structure and/or a rigid part of the braking arrangement, applied to press the braking member against the ground in order to create low pressure in an efficient manner. Furthermore, the reinforcing member may contribute to position and/or maintain the braking member in contact with the ground.

According to one embodiment the reinforcing member is a reinforcing plate.

According to one embodiment the reinforcing member comprises a plurality of reinforcing elements, such as slats, each reinforcing element extending in a direction which is perpendicular to an unfolding direction of the braking member. This embodiment has the advantage that a very compact solution having low weight may be provided. The reinforcing member may thus comprise a plurality of separate elongated elements, such as slats. The separate reinforcing elements may be arranged close to each other or with a distance between them.

According to one embodiment the reinforcing member comprises reinforcing fibres, such as glass fibres, aramid fibres or carbon fibres.

According to one embodiment the reinforcing member is made of sheet metal.

According to one embodiment the braking arrangement comprises a linkage for connection to a vehicle.

According to one embodiment the braking arrangement comprises a rigid part, such as a rigid plate, to which an unfolded portion of the braking member is attached. This embodiment has the advantage that the braking effect of the braking arrangement may be further increased, since the unfolded portion of the braking member may be pressed against the ground by a rigid part to facilitate the generation of low pressure. Furthermore, the rigid part may stabilize the contact surface of the braking member, which also facilitates the generation of low pressure and thus improves the braking effect. The rigid part part is preferably made of metal. According to one embodiment the rigid part is a metal plate.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1a is a perspective view and illustrates a low pressure braking arrangement according to an embodiment of the present disclosure in a folded configuration.
Figs. 1b-c are perspective views and illustrate the braking arrangement in Fig. 1a in an unfolded configuration.
Figs. 2a-d illustrate the function of a low pressure braking arrangement according to an embodiment of the present disclosure.
Figs. 3a-b are perspective views and illustrate a low pressure braking arrangement according to an alternative embodiment of the present disclosure.

### Detailed Description of Preferred Embodiments of the Invention

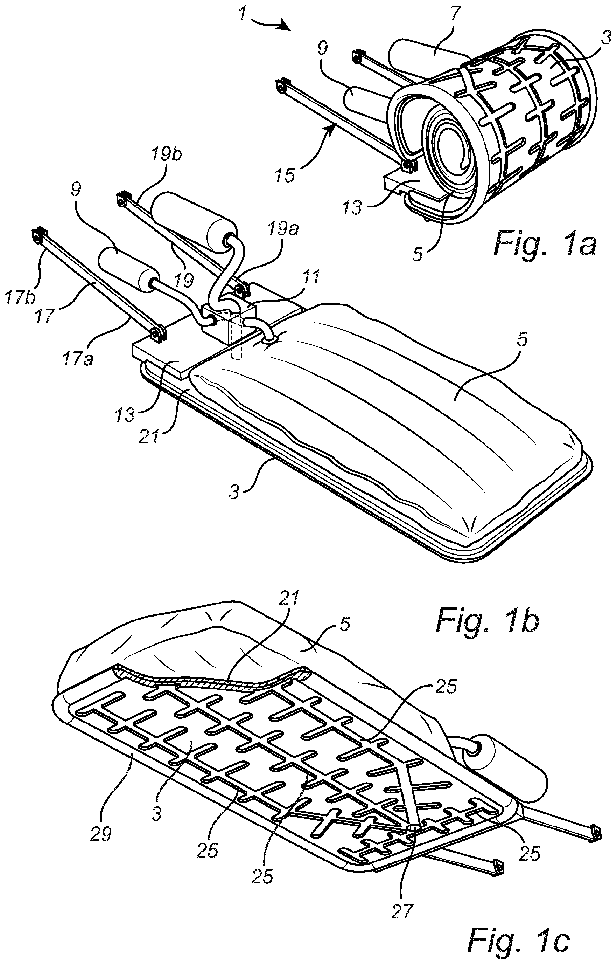

Figs. 1a-c illustrate a vehicle low pressure braking arrangement 1 according to a first embodiment of the present disclosure. The braking arrangement 1 comprises a low pressure braking member, in the form a flexible braking mat 3, an inflatable structure, in the form of an airbag 5, a low pressure source, in the form of a low pressure container 7, an inflator, in the form of a gas generator 9, and a gas directing device 11 fluidy connecting the airbag 5 to the gas generator 9 and the braking mat 3 to the low pressure container 7.

The braking arrangement 1 further comprises a rigid part, in the form of a rigid support plate 13, to which each of the flexible braking mat 3 and the airbag 5 is attached, and a linkage 15 with two link arms 17, 19 for connecting the braking arrangement 1 to a vehicle. Each of the link arms 17, 19 of the linkage 15 is at one end 17a, 19a pivotably connected to the rigid support plate 13 and at an opposite end 17b, 19b configured to be pivotably connected to the undercarriage of a vehicle. The rigid support plate 13 may e.g. be a rigid metal plate.

When connected to a vehicle the low pressure braking mat 3 is movable from a rest position with a certain ground clearance to a braking position where contact is made with the ground.

Fig. 1a illustrates the rest position and shows the braking mat 3 in a folded configuration. In this embodiment the flexible braking mat 3 and the airbag 5 are roll-folded in the folded configuration, which provides for a small package volume as well as a quick and reliable movement to an unfolded configuration.

The air pressure in the low pressure container is below the air pressure of ambient air in the rest position. The gas generator 9 is configured to, upon activation of the braking arrangement 1, inflate the airbag 5 to a fully deployed state. The airbag 5, which is roll-folded together with the flexible braking mat 3, is arranged to, upon inflation, move the flexible braking mat 3 from the folded configuration (Fig. 1a) to an unfolded configuration, illustrated in Fig. 1b. Hence, upon activation of the braking arrangement 1 the airbag 5 is inflated, thereby causing the low pressure braking mat 3 to unfold to the unfolded configuration.

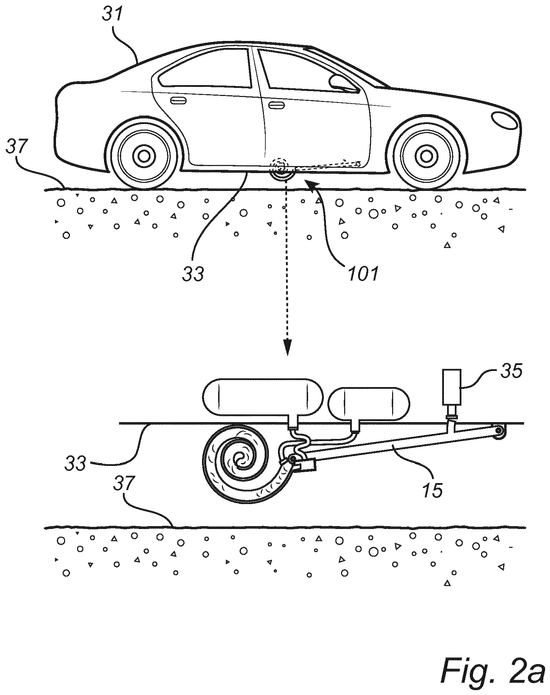

Fig. 1b illustrates the braking position and shows the braking mat 3 in the unfolded configuration. In the unfolded configuration the low pressure braking mat 3 may interact with the ground and generate a retaining force, as will be described hereinafter with reference to Figs. 2a-d.

As best illustrated in Fig. 1b the braking arrangement 1 further comprises a reinforcing member, in the form of a flexible plate 21, arranged between the flexible braking 3 mat and the airbag 5. Preferably, the reinforcing member comprises reinforcing fibres in the form of Aramide fibres, although other types of fibres, such as glass fibres or carbon fibres, may be used.

Now referring to Fig. 1c the flexible braking mat 3, which is formed from rubber, comprises several air channels 25. The air channels 25 form part of an at least partly enclosed volume that is formed between the braking mat 3 and the ground when the braking mat 3 is in the braking position.

The air channels 25 are fluidly connected to each other and to a common air evacuation outlet 27. A circumferential edge portion of the braking mat 3 is slightly thicker than a major par of the braking mat 3 and forms a sealing rim 29. The sealing rim 29 is arranged to at least partially contact the ground in the braking position, such that the at least partly enclosed volume is formed between the braking mat 3 and the ground under the vehicle.

In the braking position air may be evacuated from the at least partly enclosed volume, which is formed between the braking mat 3 and the ground, to the low pressure container 7. When air is evacuated the braking mat 3 is sucked to the ground, thereby generating a retaining force that acts to stop the vehicle. In the braking position the rigid support plate 13 stabilizes the contact surface of the braking mat 3, i.e. the surface that is configured to intreract with the ground, such that low pressure may be established quickly.

In an emergency situation where additional braking is required the low pressure braking mat 3 may thus be unfolded and pressed against the ground by evacuating air from the volume formed between the braking mat 3 and the ground. In order to obtain this effect, the air pressure in the low pressure container 7 is initially much lower than the air pressure of ambient air, preferably essentially vacuum. The braking mat 3 is pressed against the ground such that a retaining force between the braking mat 3 and the ground is obtained.

As illustrated in Fig. 1c the air channels 25 are evenly distributed in order to generate a large retaining force in a quick and efficient manner. The low pressure tank 7 is fluidly connected to the gas directing device 11 via a valve assembly (not shown) for evacuating air therefrom upon activation of the braking arrangement 1 in an emergency situation.

With reference to Figs. 2a-d the function of a braking arrangement according to the present disclosure will now be described.

Fig. 2a shows a vehicle 31 provided with a braking arrangement 101 according to a second embodiment of the present disclosure. Essentially all features disclosed in the first embodiment are also present in the second embodiment with reference numerals identifying similar or same features.

Fig. 2a illustrates a rest position. As illustrated in the enlarged part of Fig. 2a, the linkage 15 of the braking arrangement 101 is pivotally connected to the undercarriage 33 of the vehicle 31. The braking arrangement 101 further comprises a device 35 for holding the braking mat 3 in the rest position and, upon activation of the braking arrangement 101, moving the braking mat 3 to the braking position. The holding/displacement device 35 is connected to the linkage 15 and thus arranged to maintain the braking arrangement 101 in the rest positon during normal running. The braking arrangement 101 further comprises a reinforcing member (not shown) which is arranged between the inflatable structure 5 and the braking mat 3.

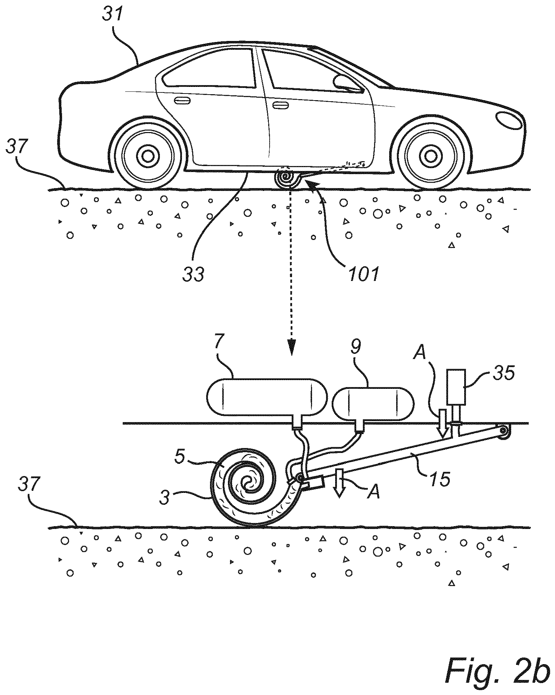

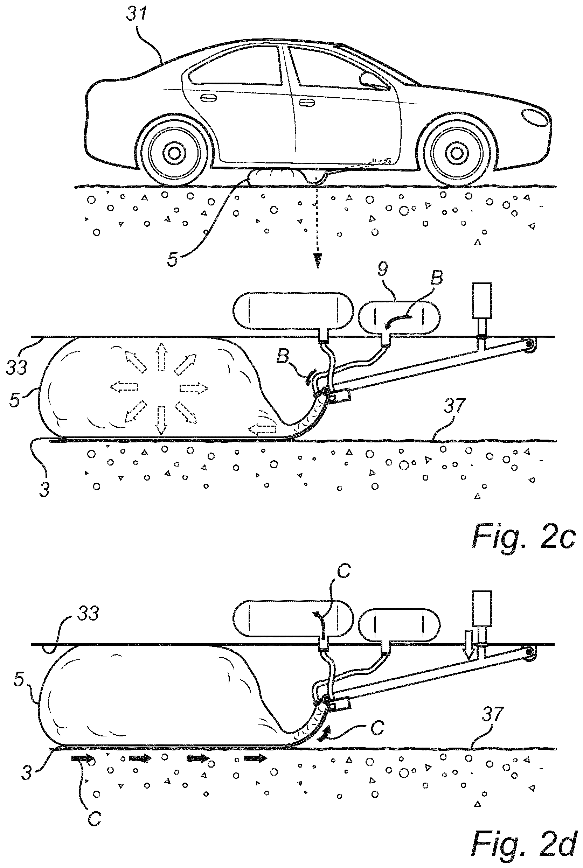

When an emergency situation is detected by a vehicle sensor system (not shown) an activation signal is generated and transmitted to the braking arrangement 101 to activate the same. Then, the device 35 releases the linkage 15, as illustrated by arrows A in the enlarged part of Fig. 2b. Simultaneously, inflation of the airbag 5 is initiated, as illustrated by arrows B in the enlarged part of Fig. 2c. Upon inflation the airbag 5 moves the braking mat 3 to a braking position. In the braking position, which is illustrated in Fig. 2c and Fig. 2d, air is evacuted from the braking mat 3, as illustrated by arrows C in the enlarged part of Fig. 2d, which generates a retaining force that acts to stop the vehicle 31.

The shape of the airbag 5 is adapted to, in a deployed state, occupy the space between the braking mat 3 and the undercarriage 33 of the vehicle 31, as illustrated by arrows in Fig. 2c. Thereby, the airbag 5 applies an initial distributed pressure force to the braking mat 3, which force facilitates the generation of low pressure in the volume formed between the braking mat 3 and the ground 37.

In an emergency situation the low pressure braking mat 3 is thus first unfolded and pressed against the ground by the airbag 5 and then sucked to the ground by evacuating air from the volume formed between the braking mat 3 and the ground 37, thereby generating a retaining force that acts o stop the vehicle 31.

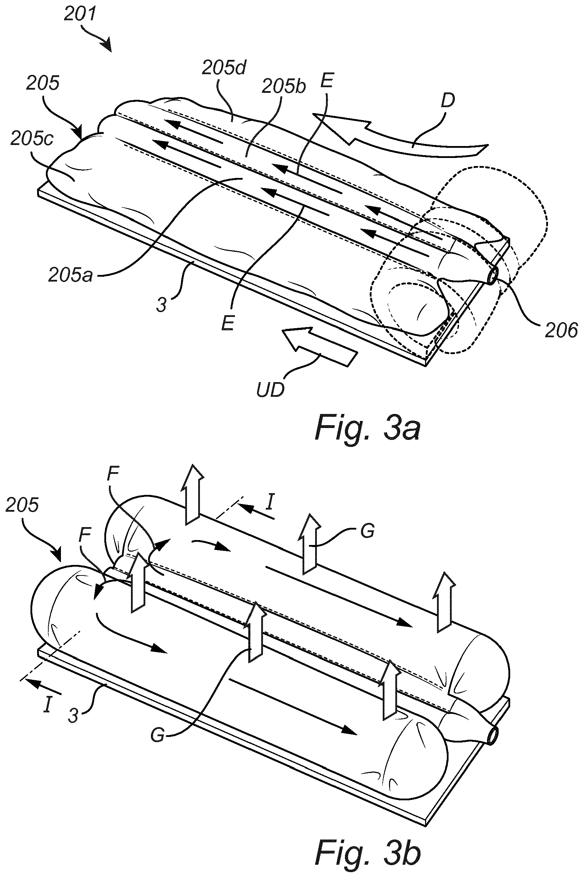

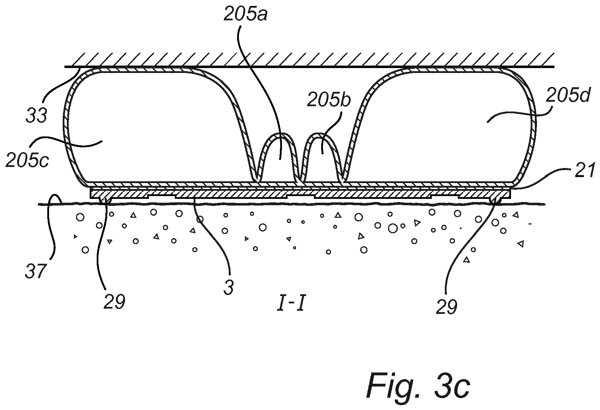

Figs. 3a-c illustrates a braking arrangment 201 according to a third embodiment of the present disclosure. Essentially all features disclosed in the first embodiment are also present in the third embodiment with reference numerals identifying similar or same features. Having mentioned this, the description will focus on explaining the differing features.

The third embodiment differs in that the inflatable structure has internal sub-chambers arranged to control the deployment thereof. In this embodiment the braking arrangement 201 comprises an airbag 205 having two inner sub-chambers, in the form of central chambers 205a, 205b, and two outer sub-chambers 205c, 205d, one on each side of the central sub-chambers 205a, 205b. The two inner sub-chambers 205a, 205b together form a primary chamber and the two outer sub-chambers 205c, 205d together form a secondary chamber. The inner and outer sub-chambers 205a, 205b, 205c, 205d are parallel with each other and extend in the unfolding direction UD (Fig. 3a) of the flexible low pressure braking mat 3. The unfolding direction UD is thus parallel with the longitudinal direction of the sub-chambers 205a, 205b, 205c, 205d, of the airbag 205. A common gas inlet 206, which is fluidly connected to an inflator (not shown), such as a gas generator or a container with pressurized gas, opens into each of the inner sub-chambers 205a, 205b. Each of the inner sub-chambers 205a, 205b opens in turn into a respective one of the outer sub-chambers 205c, 205d. Thereby, upon inflation of the airbag 205, the central chambers 205a, 205b are first inflated, which causes the airbag 205 to quickly unfold from the folded configuration, as illustrated by arrow D in Fig. 3a. Upon activation of the braking arrangement 201 inflation gas entering the gas inlet 206 is thus directed in the unfolding direction UD, as illustrated by arrows E in Fig. 3a, which causes the airbag 205 and the braking mat 3 to unfold from a folded configuration, illustrated by dotted lines in Fig. 3a, to an unfolded configuration, illustrated in Fig. 3a, as illustrated by arrow D in Fig. 3a.

When the central chambers 205a, 205b has been inflated, i.e. when the braking mat 3 has assumed an the unfolded configuration, gas flows into each of the outer sub-chambers 205c, 205d, as illustrated by arrows F in Fig. 3b, whereby the outer sub-chambers 205c, 205d are inflated, which completes the deployment of the airbag 205, as illustrated by arrows G in Fig. 3b, thereby generating an initial pressure force pressing the braking mat 3 downwardly towards the ground. As discussed hereinbefore, the initial pressure force generated by the deployed airbag 5 facilitates low pressure, or even vacuum, in a volume formed between the braking mat 3 and the ground to be generated.

Hence, the two central chambers 205a, 205b together form an unfolding portion, that serves to unfold the airbag 205 and the braking mat 3 to a flat configuration, whereas the two outer sub-chambers 205c, 205d together form a force applying portion that serves to generate an initial pressure acting to press the braking mat 3 against the ground, thereby enabling low pressure to be established quickly.

It is realized by a person skilled in the art that features from various embodiments disclosed herein may be combined with one another in order to provide further alternative embodiments.

As described hereinbefore an inflator in the form of a gas generator may be used to inflate the inflatable structure. It is appreciated that a gas generator in the form of a pyrotechnic- or hybrid gas generator may be used. It is however appreciated that other types of inflators are possible. For instance, a container with pressurized gas, which container is connected to the inflatable structure via a valve assembly, may be used.

As described hereinbefore with reference to Figs. 2a-d low pressure in the volume formed between the braking member and the ground in the braking position is obtained by means of a low pressure container. It is appreciated that low pressure may be created in a different manner, e.g. by means of a low pressure pump.

As described hereinbefore the braking arrangement may comprise a reinforcing member in the form of a plate-shaped element. It is however appreciated that such a reinforcing member may have a different design. According to one embodiment the reinforcing member comprises a plurality of reinforcing elements, in the form of slats, each reinforcing element extending in a direction which is perpendicular to an unfolding direction of the braking member.

Also, it is appreciated that a braking arrangement according to the present disclosure may work without a reinforcing member between the inflatable structure and the low pressure braking member.

## Claims

1. A low pressure vehicle braking arrangement (1; 101; 201) comprising a low pressure braking member (3) being connectable to a vehicle (31), the low pressure braking member (3) being movable from a rest position to a braking position when connected to a vehicle (31), wherein the low pressure braking member (3) is configured to, in the braking position, interact with the ground (37) and generate a retaining force, wherein the low pressure braking member (3) is flexible and held in a at least partly folded configuration in said rest position and arranged to, upon activation of the vehicle braking arrangement (1; 101; 201), assume an unfolded configuration upon movement from said rest position to said braking position, **characterized in that** the low pressure braking member (3) is roll-folded in the rest position.

2. A low pressure vehicle braking arrangement (1; 101; 201) according to claim 1, wherein the braking arrangement (1; 101; 201) comprises an inflatable structure (5; 205) which is arranged to, upon inflation, move the low pressure braking member (3) from said at least partly folded configuration to said unfolded configuration.

3. A low pressure vehicle braking arrangement (201) according claim 2, wherein the inflatable structure (205) comprises at least one primary chamber (205a, 205b) having an inlet (206) arranged to receive gas from an inflator (9) and an outlet that opens into at least one secondary chamber (205c, 205d) of the inflatable structure (205), said primary chamber (205a, 205b), in an inflated position, extending in an unfolding direction (UD) of the braking member (3).

4. A low pressure vehicle braking arrangement (201) according to claim 3, wherein said secondary chamber comprises two sub-chambers (205c, 205d), preferably one on each side of a primary chamber (205a, 205b).

5. A low pressure vehicle braking arrangement (201) according to any one of the claims 3-4, wherein the primary chamber comprises two sub-chambers (205a, 205b), each of which opens into a common secondary chamber or into a respective one of said sub-chambers of the secondary chamber (205c, 205d).

6. A low pressure vehicle braking arrangement (1; 101; 201) according to any one of the preceding claims, wherein the vehicle braking arrangement (1; 101; 201) comprises a reinforcing member (21) arranged between the inflatable structure (5) and the low pressure braking member (3).

7. A low pressure vehicle braking arrangement (1; 101; 201) according to claim 6, wherein the reinforcing member is a reinforcing plate (21).

8. A low pressure vehicle braking arrangement according to claim 6, wherein the reinforcing member comprises a plurality of reinforcing elements, such as slats, each reinforcing element extending in a direction which is perpendicular to an unfolding direction (UD) of the braking member.

9. A low pressure vehicle braking arrangement (1; 101; 201) according to any one of the claims 6-8, wherein the reinforcing member (21) comprises reinforcing fibres, such as glass fibres, aramid fibres or carbon fibres.

10. A low pressure vehicle braking arrangement (1; 101; 201) according to any one of the preceding claims, wherein the braking arrangement (1; 101; 201) comprises a linkage (15) for connection to a vehicle (31).

11. A low pressure vehicle braking arrangement (1) according to any one of the preceding claims, wherein the braking arrangement (1) comprises a rigid part (13), such as a rigid plate, to which an unfolded portion of the braking member (3) is attached.

## Patentansprüche

1. Niederdruckfahrzeugbremsvorrichtung (1; 101; 201), die ein Niederdruckbremsglied (3) umfasst, das mit einem Fahrzeug (31) verbindbar ist, wobei das Niederdruckbremsglied (3) aus einer Ruhestellung in eine Bremsstellung bewegbar ist, wenn es mit einem Fahrzeug (31) verbunden ist, wobei das Niederdruckbremsglied (3) so eingerichtet ist, dass es in der Bremsstellung mit dem Boden (37) wechselwirkt und eine Festhaltekraft erzeugt,
wobei
das Niederdruckbremsglied (3) flexibel und in der Ruhestellung in einer zumindest teilweise zusammengelegten Gestalt gehalten wird und so angeordnet ist, dass es bei Betätigung der Fahrzeugbremsvorrichtung (1; 101; 201) bei einer Bewegung aus der Ruhestellung in die Bremsstellung eine entfaltete Gestalt annimmt,
**dadurch gekennzeichnet, dass**
das Niederdruckbremsglied (3) in der Ruhestellung zusammengerollt zusammengelegt ist.

2. Niederdruckfahrzeugbremsvorrichtung (1; 101; 201) nach Anspruch 1, wobei die Bremsvorrichtung (1; 101; 201) eine aufblasbare Struktur (5; 205) umfasst, die so angeordnet ist, dass sie beim Aufblasen das Niederdruckbremsglied (3) aus der zumindest teilweise zusammengelegten Gestalt in die entfaltete Gestalt bewegt.

3. Niederdruckfahrzeugbremsvorrichtung (201) nach Anspruch 2, wobei die aufblasbare Struktur (205) mindestens eine primäre Kammer (205a, 205b) mit einer Einlassöffnung (206) umfasst, die so angeordnet ist, dass sie Gas von einem Gasgenerator (9) aufnimmt, und einer Auslassöffnung, die in mindestens eine sekundäre Kammer (205c, 205d) der aufblasbaren Struktur (205) mündet, wobei die primäre Kammer (205a, 205b), in einer aufgeblasenen Stellung, in einer Entfaltungsrichtung (UD) des Bremsglieds (3) verläuft.

4. Niederdruckfahrzeugbremsvorrichtung (201) nach Anspruch 3, wobei die sekundäre Kammer zwei Teilkammern (205c, 205d) umfasst, vorzugsweise eine auf jeder Seite einer primären Kammer (205a, 205b).

5. Niederdruckfahrzeugbremsvorrichtung (201) nach einem der Ansprüche 3 und 4, wobei die primäre Kammer zwei Teilkammern (205a, 205b) umfasst, von denen jede in eine gemeinsame sekundäre Kammer oder in eine jeweilige von den Teilkammern der sekundären Kammer (205c, 205d) mündet.

6. Niederdruckfahrzeugbremsvorrichtung (1; 101; 201) nach einem der vorhergehenden Ansprüche, wobei die Fahrzeugbremsvorrichtung (1; 101; 201) ein Verstärkungselement (21) umfasst, das zwischen der aufblasbaren Struktur (5) und dem Niederdruckbremsglied (3) angeordnet ist.

7. Niederdruckfahrzeugbremsvorrichtung (1; 101; 201) nach Anspruch 6, wobei das Verstärkungsglied eine Verstärkungsplatte (21) ist.

8. Niederdruckfahrzeugbremsvorrichtung nach Anspruch 6, wobei das Verstärkungsglied eine Vielzahl von Verstärkungselementen, beispielsweise Stäbe, umfasst, wobei jedes Verstärkungselement in einer Richtung verläuft, das senkrecht zu einer Entfaltungsrichtung (UD) des Bremsglieds verläuft.

9. Niederdruckfahrzeugbremsvorrichtung (1; 101; 201) nach einem der Ansprüche 6 bis 8, wobei das Verstärkungsglied (21) Verstärkungsfasern wie Glasfasern, Aramidfasern oder Kohlenstofffasern umfasst.

10. Niederdruckfahrzeugbremsvorrichtung (1; 101; 201) nach einem der vorhergehenden Ansprüche, wobei die Bremsvorrichtung (1; 101; 201) ein Gestänge (15) zur Verbindung mit einem Fahrzeug (31) umfasst.

11. Niederdruckfahrzeugbremsvorrichtung (1) nach einem der vorhergehenden Ansprüche, wobei die Bremsvorrichtung (1) einen starren Teil (13), beispielsweise eine starre Platte, umfasst, an der ein entfalteter Abschnitt des Bremsglieds (3) angebracht ist.

## Revendications

1. Système de freinage de véhicule à basse pression (1 ; 101 ; 201) comprenant un organe de freinage à basse pression (3) qui peut être raccordé à un véhicule (31), l'organe de freinage à basse pression (3) étant mobile d'une position de repos à une position de freinage quand il est raccordé au véhicule (31), l'organe de freinage à basse pression (3) étant conçu pour, dans la position de freinage, interagir avec le sol (37) et générer une force de retenue,
dans lequel
l'organe de freinage à basse pression (3) est flexible et maintenu dans une configuration au moins partiellement pliée dans ladite position de repos et agencé pour, lors de l'activation du système de freinage de véhicule (1 ; 101 ; 201), adopter une configuration dépliée lors du déplacement de ladite position de repos à ladite position de freinage, **caractérisé en ce que**
l'organe de freinage à basse pression (3) est roulé-plié dans la position de repos.

2. Système de freinage de véhicule à basse pression (1 ; 101 ; 201) selon la revendication 1, dans lequel le système de freinage (1 ; 101 ; 201) comprend une structure gonflable (5 ; 205) qui est agencée pour, lors du gonflage, déplacer l'organe de freinage à basse pression (3) de ladite configuration au moins partiellement pliée à ladite configuration dépliée.

3. Système de freinage de véhicule à basse pression (201) selon la revendication 2, dans lequel la structure gonflable (205) comprend au moins une chambre principale (205a, 205b) présentant une entrée (206) agencée pour recevoir du gaz d'un gonfleur (9) et une sortie qui s'ouvre sur au moins une chambre secondaire (205c, 205d) de la structure gonflable (205), ladite chambre principale (205a, 205b), dans une position gonflée, s'étendant dans une direction de dépliage (UD) de l'organe de freinage (3).

4. Système de freinage de véhicule à basse pression (201) selon la revendication 3, dans lequel ladite chambre secondaire comprend deux sous-chambres (205c, 205d), de préférence une de chaque côté d'une chambre principale (205a, 205b).

5. Système de freinage de véhicule à basse pression (201) selon l'une quelconque des revendications 3 et 4, dans lequel la chambre principale comprend deux sous-chambres (205a, 205b), dont chacune s'ouvre sur une chambre secondaire commune ou sur une sous-chambre respective desdites sous-chambres de la chambre secondaire (205c, 205d).

6. Système de freinage de véhicule à basse pression (1 ; 101 ; 201) selon l'une quelconque des revendications précédentes, dans lequel le système de freinage de véhicule (1 ; 101 ; 201) comprend un organe de renforcement (21) agencé entre la structure gonflable (5) et l'organe de freinage à basse pression (3).

7. Système de freinage de véhicule à basse pression (1 ; 101 ; 201) selon la revendication 6, dans lequel l'organe de renforcement est une plaque de renforcement (21).

8. Système de freinage de véhicule à basse pression selon la revendication 6, dans lequel l'organe de renforcement comprend une pluralité d'éléments de renforcement, tels que des lattes, chaque élément de renforcement s'étendant dans une direction qui est perpendiculaire à une direction de dépliage (UD) de l'organe de freinage.

9. Système de freinage de véhicule à basse pression (1 ; 101 ; 201) selon l'une quelconque des revendications 6 à 8, dans lequel l'organe de renforcement (21) comprend des fibres de renforcement, telles que des fibres de verre, des fibres aramides ou des fibres de carbone.

10. Système de freinage de véhicule à basse pression (1 ; 101 ; 201) selon l'une quelconque des revendications précédentes, dans lequel le système de freinage (1 ; 101 ; 201) comprend une tringlerie (15) pour le raccordement à un véhicule (31).

11. Système de freinage de véhicule à basse pression (1) selon l'une quelconque des revendications précédentes, dans lequel le système de freinage (1) comprend une partie rigide (13), telle qu'une plaque rigide, à laquelle une portion dépliée de l'organe de freinage (3) est reliée.
